# EUROPÄISCHE PATENTANMELDUNG

(11) **EP 2 985 115 A2**
(43) Veröffentlichungstag der Anmeldung: **17.02.2016**
(21) Anmeldenummer: 15183476.9
(22) Anmeldetag: 01.03.2013
(51) Int. Cl.: B24B 7/22, B24B 9/06, B24B 9/08, B24B 51/00, B24B 1/00, B24B 27/00, B24B 7/07

(54) **VERFAHREN ZUM MEHRSTUFIGEN SCHLEIFEN VON WERKSTÜCKEN, SOWIE VAKUUMTISCH, VORRATSBEHÄLTER, ABSTREIFEINRICHTUNG UND ANLAGE ZUR DURCHFÜHRUNG DES VERFAHRENS**

(30) Priorität: 29.03.2012 DE 102012006502
(62) Teilanmeldung aus: 13709316.7
(71) Anmelder: Dula-Werke Dustmann & Co. GmbH, 44225 Dortmund (DE)
(72) Erfinder: KOTTBUS, Frank, 48683 Ahaus (DE); MÜLLER, Knut, 44225 Dortmund (DE)
(74) Vertreter: Buse, Mentzel, Ludewig Patentanwaltskanzlei

(57) **Zusammenfassung**

Die Erfindung betrifft eine Abstreifeinrichtung (40) bei welcher wenigstens ein Abstreifer (41) vorgesehen ist, der eine Kante (42) aufweist, an der die physische Verbindung eines Schleifmittels (14) am Schleifkopf (11) anlösbar ist und der weiterhin einen beweglichen Halter (43) umfasst, durch den das angelöste Schleifmittel (14) festlegbar ist. Der bewegliche Halter (43) ist über wenigstens ein Zylinder (44), wie einem Gasdruckzylinder oder einem Hydraulikzylinder, bewegbar und gegen eine Haltefläche (45) drückbar. Das Schleifmittel (14) ist zwischen den beweglichen Halter (43) und die Haltefläche (45) klemmbar und von dort wieder vom Schleifkopf (11) ausnehmbar. Vorzugsweise ist noch eine Entsorgungseinrichtung, wie eine Rutsche (47) vorgesehen, über welche verbrauchte Schleifmittel (14) der Entsorgung zuführbar sind. (Fig. 7)

## Beschreibung

Die Erfindung betrifft ein Verfahren zum mehrstufigen Schleifen von Werkstücken, insbesondere aus harten mineralischen Materialien, sowie einen Vakuumtisch, einen Vorratsbehälter, eine Abtreifeinrichtung und eine Anlage zur Durchführung dieses Verfahrens. Mineralische Werkstoffe, wie sie beispielsweise in der Möbelindustrie, im Innenausbau oder auch im Ladenbau eingesetzt werden, sind häufig sehr hart. Zur Erhaltung der gewünschten Oberflächeneigenschaften der Bauteile aus diesen Materialien ist oft eine Oberflächenbearbeitung durch ein Schleifverfahren notwendig, häufig auch durch mehrere verschiedenartige Schleifmittel. Bisher werden derartige Schleifverfahren vollständig von Hand durchgeführt, was jedoch sehr zeitaufwendig und damit kostenintensiv ist. Die Personen, die mit den händischen Schleifverfahren betraut sind, müssen besonders gründlich arbeiten und gut geschult sein, um ein gleichmäßiges Schleifergebnis zu erhalten. Insbesondere im Innenausbau und Ladenbau müssen darüber hinaus verschiedenste Werkstücke bearbeitet werden, welche sowohl flächig ausgebildet sein können, jedoch auch die Form eines Korpus aufweisen können. Es ist daher notwendig, immer wieder unterschiedliche gearbeitete Werkstücke schleifend zu bearbeiten, was es zusätzlich schwierig macht, diesen Prozess automatisiert zu betreiben.

Aufgabe der Erfindung ist es daher, ein Schleifverfahren zu entwickeln, bei denen unterschiedlichste Werkstücke mit verschiedenen Formen voll automatisch bearbeitet werden können. Weiter ist es Aufgabe der Erfindung, eine vollständige Anlage zur Durchführung dieses Verfahrens bereitzustellen sowie einzelne Anlagenteile, die gewisse Aufgaben des Prozesses übernehmen, wie beispielsweise die sichere Ausrichtung und Halterung eines plattenförmigen Werkstückes sowie die automatische Bevorratung und den automatischen Austausch von verschiedenen Schleifmitteln. Diese Aufgabe wir erfindungsgemäß durch die Merkmale des Anspruches 1 sowie die Merkmale der Ansprüche 13, 14, 17 und 21 gelöst, denen folgende besondere Bedeutung zukommt.

Für das mehrstufige Schleifverfahren wird ein Roboter eingesetzt. Zunächst wird das Werkstück dabei in einen Bearbeitungsbereich verbracht und dort vom Roboter vermessen und/oder ausgerichtet, um eine Nullposition zu definieren. Der Roboter umfasst dann einen Schleifkopf mit dem er dann ein erstes Schleifmittel, vorzugsweise aus einem Vorratsbehälter aufnimmt und einen ersten Schleifprozess beginnt. Selbstverständlich kann der Schleifkopf zu Beginn des ersten Schleifprozesses auch bereits mit dem benötigten ersten Schleifmittel ausgestattet sein. Nach Beendigung dieses ersten Schleifprozesses gibt der Roboter das erste Schleifmittel wieder ab. Danach nimmt der Roboter ein zweites Schleifmittel auf, vorzugsweise wieder aus einem Vorratsbehälter, wobei sich das Schleifmittel im gleichen Vorratsbehälter befinden kann wie das erste Schleifmittel oder auch in einem anderen Vorratsbehälter. Er beginnt dann den zweiten Schleifprozess und gibt nach Beendigung des zweiten Schleifprozesses das zweite Schleifmittel wieder ab. Je nach gewünschtem Schleifergebnis können noch ein oder mehrere weitere Schleifprozesse folgen, bei denen der Roboter jeweils das entsprechende Schleifmittel aufnimmt, den Schleifprozess durchführt und dann das jeweilige Schleifmittel wieder abgibt. Auch hier können die Schleifmittel wieder aus einem Vorratsbehälter entnommen werden. Nach Beendigung des letzten Schleifprozesses wird das Werkstück aus dem Bearbeitungsbereich entfernt. Für jedes Werkstück ist dabei ein gewünschter Schleifprozess als Programm eingespeichert, so dass der Roboter die exakten Schleifwege, die zu verwendenden Schleifmittel, die Geschwindigkeiten, die Andruckkraft und auch alle weiteren für den Schleifprozess notwendigen Parameter kennt. Die zweiten und weiteren Schleifmittel können identisch zum ersten Schleifmittel sein oder auch anders beschaffen sein. Dies hängt vom jeweiligen Schleifprozess ab. Da für jedes Werkstück ein eigener Schleifprozess einprogrammiert werden kann, kann der Roboter viele verschiedene Werkstücke bearbeiten, die unterschiedliche Abmessungen, Ausgestaltungen oder gewünschte Bearbeitungsschritte haben. Die Festlegung bzw. Definition der Nullposition wird benötigt, um den zugehörigen Schleifprozess korrekt auszuführen.

Bevorzugterweise wird das jeweils verwendete Schleifmittel nach Beendigung des zugehörigen Schleifprozesses an einer Abstreifeinrichtung abgestreift. Diese Abstreifeinrichtung ermöglicht ein einfaches und automatisches Abstreifen des Schleifmittels, wenn es nicht mehr verwendet werden soll bzw. wenn der mit diesem Schleifmittel durchzuführende Schleifprozess beendet ist. Es kann auch ein Abstreifsensor vorgesehen sein, welcher detektiert, ob das Schleifmittel tatsächlich abgestreift wurde. Falls dies nicht der Fall ist, kann der Schleifkopf den Abstreifversuch wiederholen, bis eine erfolgreiche Abstreiffunktion des Schleifmittels erfolgt ist. Hierzu wird der Schleifkopf nach einem fehlgeschlagenen Abstreifversuch von der Abstreifeinrichtung beabstandet und kurz gedreht, um möglichst einen anderen Angriffspunkt am Schleifmittel für den Abstreifvorgang zu wählen. Es ist auch möglich, dass die Anlage nach mehreren fehlgeschlagenen Abstreifversuchen eine Fehlermeldung an die Bedienpersonen absetzt, damit das Schleifmittel dann manuell entfernt werden kann.

Als Schleifmittel können handelsübliche scheibenförmige Standardschleifmittel Verwendung finden. Die Schleifmittel müssen nicht mit einem anderen Bauteil bereits vorher zu einer Baugruppe zusammengefügt werden, bevor sie mit dem Roboter bzw. dem Schleifkopf in Wirkverbindung treten. Der Schleifkopf kann beispielsweise ein Klettmaterial umfassen, während das Schleifmittel dann auf seiner Rückseite ein Flauschmaterial aufweist, welches an dem Klettmaterial des Schleifkopfes haftet. So können einfache und kostengünstige handelsübliche Standardschleifmittel Verwendung finden und das Bestücken des Schleifkopfes mit Schleifmittel sowie das Abstreifen des Schleifmittels nach Beendigung des zugehörigen Schleifprozesses können einfach erfolgen. Selbstverständlich ist auch eine andere Möglichkeit der Befestigung des Schleifmittels am Schleifkopf denkbar. Es ist dann möglich, ein abgestreiftes Schleifmittel direkt der Entsorgung zuzuführen, allerdings kann es auch noch vorrätig gehalten werden, um bei einem späteren Schleifprozess nochmals zum Einsatz zu kommen.

Bevorzugterweise ist vorgesehen, das Werkstück zwischen zwei Schleifprozessen zu drehen, bevorzugterweise um 180°. Danach kann entweder das Werkstück direkt weiterbearbeitet werden oder es wird zunächst wieder neu ausgerichtet auf eine definierte Nullposition oder neu vermessen, um eine Nullposition zu definieren. So ist es möglich, das Werkstück auf mehreren Seiten zu bearbeiten, ohne einen weiteren Roboter o.ä. vorzusehen. So kann beispielsweise ein planes Werkstück auf einem Vakuumtisch bearbeitet werden; hierbei kann nicht nur die nach oben zeigende Oberfläche, sondern auch die Kanten des Werkstückes bearbeitet werden. Durch das Drehen des Werkstückes um 180° ist es möglich sämtliche Kanten des planen Werkstückes zu schleifen.

Die Drehung des Werkstückes kann beispielsweise über einen Vakuumgreifer oder auch durch einen Drehtisch erfolgen. Ein Vakuumgreifer empfiehlt sich insbesondere bei flächigen Werkstücken bzw. bei Werkstücken mit planer Oberfläche. Hierbei nimmt der Vakuumgreifer üblicherweise das Werkstück auf, dreht es um 180° und legt es im Bearbeitungsbereich wieder ab. Befindet sich ein Werkstück auf einem Drehtisch, so wird der gesamte Drehtisch um 180° gedreht. Dies ist auch für korpusförmige Drehstücke, die teilweise auch sphärische oder gebogene Oberflächen aufweisen können, sehr praktisch. Selbstverständlich sind auch Drehungen von mehr oder weniger als 180° sowohl mit dem Vakuumgreifer als auch mit dem Drehtisch möglich.

In einem bevorzugten Ausführungsbeispiel wird das Werkstück auf wenigstens einer nicht planen Oberfläche bearbeitet und/oder auf mehr als einer Oberfläche, wobei die Oberflächen parallel, senkrecht oder in einem anderen Winkel zueinander angeordnet sein können. Hierdurch ist es möglich, Werkstücke verschiedenster Ausgestaltungen auf mehreren Oberflächen zu bearbeiten bzw. auch gebogene, sphärische oder anders geformte Oberflächen zu bearbeiten. Somit können nahezu beliebig geformte Werkstücke nach dem erfindungsgemäßen Verfahren bearbeitet werden.

Soll das Werkstück vor der Bearbeitung vermessen werden, um eine Nullposition zu definieren, so geschieht dies vorteilhafterweise mittels wenigstens eines Messdorns und/oder zumindest eines Lasers. So kann die genaue Position des Werkstückes vor dem Beginn des Schleifprozesses genau bestimmt werden, wodurch es nicht mehr darauf ankommt, das Werkstück millimetergenau auf der Bearbeitungsfläche zu positionieren. Wenn der Roboter die genaue Position des Werkstückes ermittelt hat, kann mit dem Schleifprozess begonnen werden.

Besonders vorteilhaft ist es, wenn der Roboter an derselben Schnittstelle mit dem Schleifkopf, dem Vakuumgreifer und dem Messdorn in mechanische und elektrische Wirkverbindung tritt. Die Bauteile Schleifkopf, Vakuumgreifer und Messdorn weisen dann jeweils eine passende Gegenschnittstelle auf. Der Roboter nimmt dann jeweils den Bauteil auf, der für den aktuellen Verfahrensschritt benötigt wird. Die anderen Bauteile werden abgelegt und so gelagert, dass sie für den Roboter leicht greifbar sind. Es ist besonders einfach und kostengünstig realisierbar am Roboterkopf eine einzige Schnittstelle vorzusehen, die mit der jeweiligen Gegenschnittstelle an dem benötigten Bauteil in Wirkverbindung tritt.

Ein bevorzugtes Verfahren beginnt damit, dass der Roboter zunächst das zu bearbeitende Werkstück von einem Bevorratungsbereich in den Bearbeitungsbereich bringt und dort vorzugweise auf eine definierte Nullposition ausrichtet. Die Verbringung in den Bearbeitungsbereich durch den Roboter kann direkt oder indirekt, unter Zuhilfenahme weiterer Bauteile, geschehen. Unter direkt wird verstanden, dass der Roboter beispielsweise durch den Vakuumgreifer das Werkstück bereits in den Bearbeitungsbereich bzw. in die definierte Nullposition bringt. Indirekt kann der Roboter aber auch Befehle aussenden, die andere in der Anlage befindliche Einrichtungen dazu bringen, das Werkstück in den Bearbeitungsbereich bzw. die entsprechende Nullposition zu bringen.

Vorteilhafterweise bearbeitet der Roboter auch plattenförmige Werkstücke, welche er mit einem Vakuumgreifer in den bzw. aus dem Bearbeitungsbereich bringen kann. Ein solcher Vakuumgreifer ist schonend für das Werkstück und beschädigt die Oberfläche nicht. Darüber, hinaus lassen sind unterschiedlich große und unterschiedlich geformte plattenförmige Werkstücke so einfach von dem Roboter transportieren.

Nach Abschluss des Schleifvorganges bzw. der Bearbeitung der plattenförmigen Werkstücke können diese in einem Ablagebereich gestapelt werden. Um zu verhindern, dass die frisch bearbeitete Oberfläche der Werkstücke beschädigt wird, kann zwischen je zwei Werkstücken eine Schutzlage eingebracht werden, beispielsweise eine Kartonagelage.

Der Roboter kann zusätzlich über eine Absaugeinrichtung verfügen, die den beim Schleifvorgang entstehenden Staub absaugt. Der Staub kann dann in einen Sammelbehälter überführt oder direkt der Entsorgung zugeführt werden.

Besonders vorteilhaft ist es, plattenförmige Werkstücke auf einem Vakuumtisch zu fixieren. So können sie während der Bearbeitung nicht versehentlich verschoben werden oder herunterrutschen. Der Vakuumtisch weist dabei ein oder mehrere Vakuumfelder auf, die die Rückseite des Werkstückes zumindest bereichsweise ansaugen. Besonders vorteilhaft ist es, den Vakuumtisch kipp- und/oder drehbar auszuführen, da dann der Vakuumtisch jeweils so ausgerichtet werden kann, wie es die momentane Bearbeitung des Werkstückes verlangt.

Ein besonders bevorzugtes Verfahren zur Bearbeitung plattenförmiger Werkstücke sieht vor, dass das Werkstück zunächst auf den Vakuumtisch verbracht wird, ohne dass ein Vakuum am Vakuumtisch anliegt. Das Werkstück kann hierbei beispielsweise durch einen Vakuumgreifer am Roboter auf den Vakuumtisch gelegt werden. Als Nächstes wird der Vakuumtisch dann in eine erste Richtung gekippt, wodurch das Werkstück durch die Schwerkraft in Richtung einer ersten Anschlagkante gegen einen ersten Anschlag rutscht. Dort bleibt es dann liegen. Das Werkstück kann dann insbesondere von einem Vakuumgreifer aufgenommen und mit einer zweiten Kante gegen einen zweiten Anschlag bewegt werden, so dass das Werkstück an beiden Anschlägen anliegt. Vorzugsweise sind die beiden Anschlagkanten senkrecht zueinander angeordnet. Wenn das Werkstück so ausgerichtet ist, wird das Vakuum des Vakuumtisches eingeschaltet, wodurch das Werkstück auf dem Vakuumtisch fixiert wird. Besonders vorteilhaft ist es, erst danach das Vakuum des Vakuumgreifers abzuschalten. Hierdurch wird vermieden, dass durch die Abschaltung des Vakuums des Vakuumgreifers das Werkstück auf dem Vakuumtisch wieder verrutscht. Das so ausgerichtete plattenförmige Werkstück ist nun in der definierten Nullposition und kann vom Roboter wunschgemäß bearbeitet werden.

Über das Verfahren hinaus umfasst die vorliegende Erfindung auch noch einen Vakuumtisch, einen Vorratsbehälter und eine Abstreifeinrichtung zur Verwendung bei der Durchführung des vorgenannten Verfahrens. Darüber hinaus wird auch eine komplette Anlage zur Durchführung des Verfahrens mit den vorerwähnten Bauteilen von der Erfindung mit umfasst. Auf diese Bauteile sowie die Anlage wird im Weiteren noch eingegangen werden.

Weitere Vorteile und Ausführungsformen der Erfindung ergeben sich aus der nachfolgenden Beschreibung, den Unteransprüchen sowie den Zeichnungen. In den Zeichnungen ist die Erfindung wie folgt dargestellt.
- Fig. 1:: eine Anlage zur Durchführung des Verfahrens, perspektivisch,
- Fig. 2:: eine Anlage gemäß Fig. 1 in Draufsicht,
- Fig. 3:: ein Roboter, wie er zur Durchführung des Verfahrens eingesetzt wird,
- Fig. 4:: ein Vakuumgreifer,
- Fig. 5:: eine Abstreifeinrichtung, perspektivisch,
- Fig. 6:: die Abstreifvorrichtung aus Fig. 5 mit weiteren Bauteilen,
- Fig. 7:: ein Abstreifer ohne Schleifmittel,
- Fig. 7a:: der Abstreifer aus Fig. 7 ohne Halter,
- Fig. 7b:: der Abstreifer aus Fig. 7 perspektivisch von hinten,
- Fig. 8:: ein Abstreifer mit Schleifmittel,
- Fig. 9:: ein Vorratsbehälter, perspektivisch,
- Fig. 10:: der Vorratsbehälter aus Fig. 9 von unten betrachtet,
- Fig. 11:: ein Vakuumtisch,
- Fig. 12:: die detaillierte Oberfläche des Vakuumtisches aus Fig. 11.

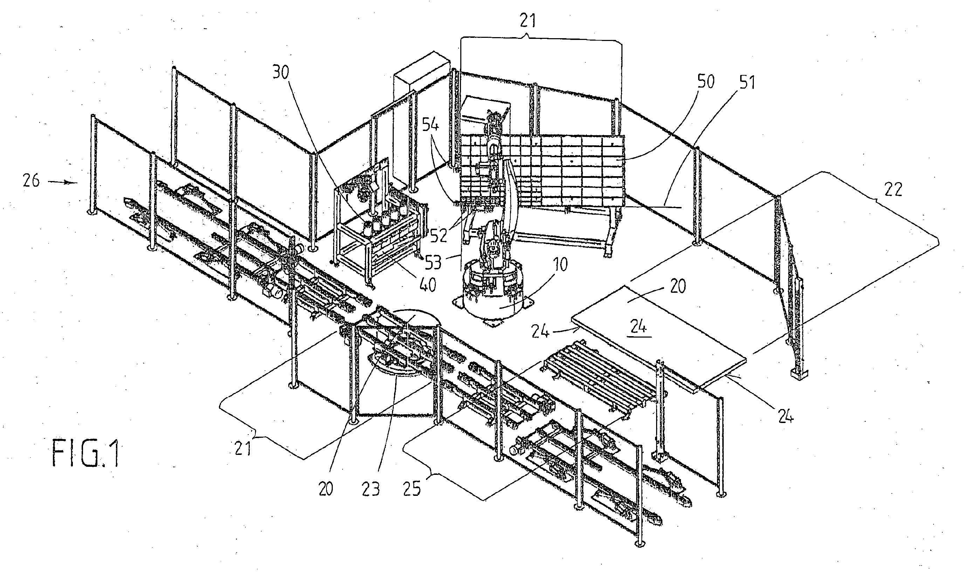

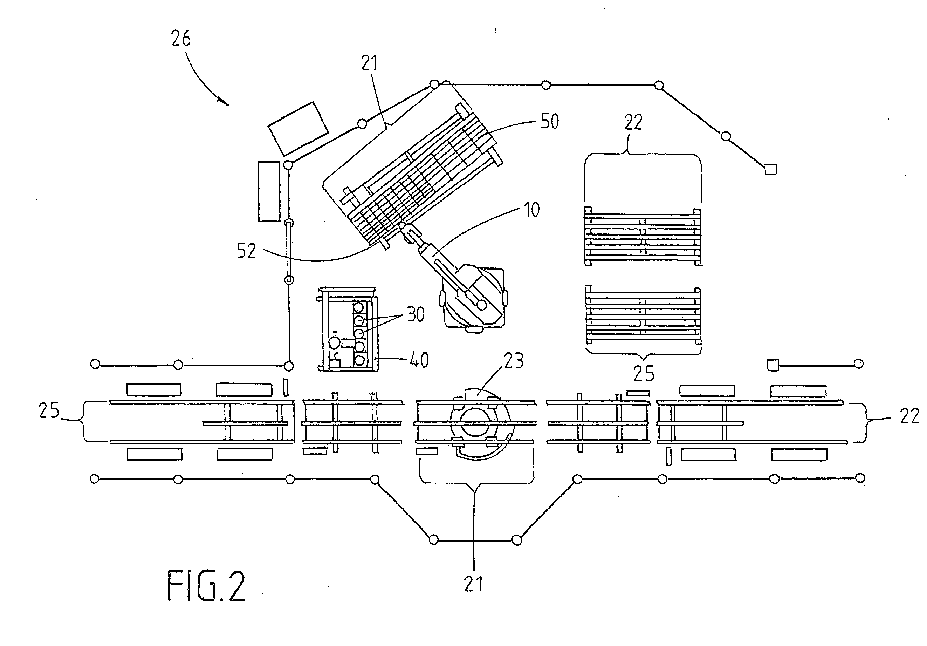

Die Fig. 1 und 2 zeigen eine Anlage 26 zur Durchführung des vorbeschriebenen erfindungsgemäßen Verfahrens. Es ist ein Roboter 10 vorgesehen sowie eine Abstreifeinrichtung 40 mit mehreren Abstreifern 41 und mehreren Vorratsbehältern 30. Des Weiteren erkennt man einen Vakuumtisch 50. Darüber hinaus ist ein Bevorratungsbereich 22 vorgesehen, der für plattenförmige Werkstücke 20 gedacht ist, die eine plane Oberfläche 24 aufweisen. Darüber hinaus existiert noch ein Ablagebereich 25, der für die bereits bearbeiteten plattenförmigen Werkstücke 20 gedacht ist. In Fig. 1 ist exemplarisch nur ein Werkstück 20 gezeigt. Der Roboter 10 nimmt sich ein zu bearbeitendes Werkstück 20 vom Bevorratungsbereich 22, legt es auf den Vakuumtisch 50, auf den später noch näher eingegangen werden wird, führt die vorgesehenen Schleifarbeiten durch und legt das bearbeitete Werkstück 20 dann im Ablagebereich 25 ab. Danach widmet er sich dem nächsten plattenförmigen Werkstück 20 oder einem anderen Werkstück 20. Neben dem Vakuumtisch 50, der einen ersten Bearbeitungsbereich 21 bildet, ist auch noch ein zweiter Bearbeitungsbereich 21 vorgesehen. Dieser dient insbesondere der Bearbeitung von korpusförmigen Werkstücken 20. Dieser zweite Bearbeitungsbereich 21 umfasst dabei einen Drehtisch 23. Dieser ist mitsamt dem korpusförmigen Werkstück 20 drehbar, so dass das Werkstück 20 von mehreren Seiten auf mehreren Oberflächen 24 bearbeitet werden kann, bevor es aus dem Bearbeitungsbereich 21 herausgebracht wird. Für die auf dem Drehtisch 23 bearbeiteten Werkstück 20 ist der Ablagebereich 25 entlang der hier als Kettenförderer ausgeführten Straße gelegen. Der Kettenförderer dient der Zu- und Abführung der Werkstücke 20 zum Drehtisch 23. Der Bevorratungsbereich 22 liegt dabei am Anfang dieser Straße. Für beide Bevorratungsbereiche 22 und Ablagebereiche 25 können noch weitere Bauteile und Elemente vorgesehen sein, welche immer frische Werkstücke 20 in dem Bevorratungsbereich 22 bringen und fertig bearbeitete Werkstücke 20 aus dem Ablagebereich 25 entfernen.

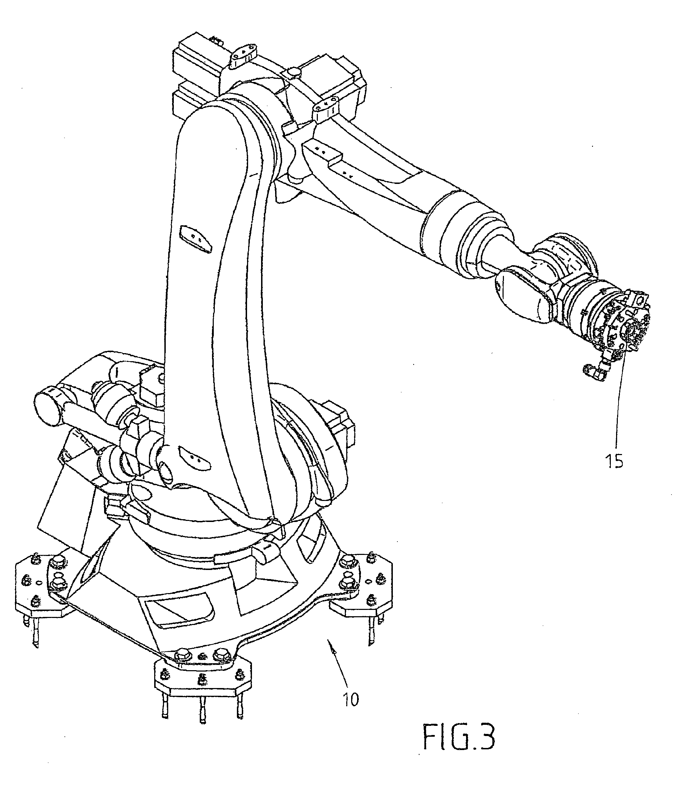

Fig. 3 zeigt einen Roboter 10 mit Schnittstelle 15. Der Roboter 10 ist drehbar und weist darüber hinaus mehrere Gelenke auf. Er ist stationär in der in den Fig. 1 und 2 gezeigten Anlage 26 angeordnet. Der Schleifkopf 11 ist exzentrisch am Roboter 10 gelagert und hier nicht dargestellt. Man erkennt vielmehr die Schnittstelle 15, über welche verschiedene Bauteile, wie ein Schleifkopf 11, ein Vakuumgreifer 12 oder auch ein Messdorn 13 mit dem Roboter 10 in Wirkverbindung gebracht werden können. Diese Bauteile 11, 12, 13 weisen dazu jeweils eine Gegerischnittstelle 16 auf, die mit der Schnittstelle 15 am Roboter 10 in Wirkverbindung bringbar ist.

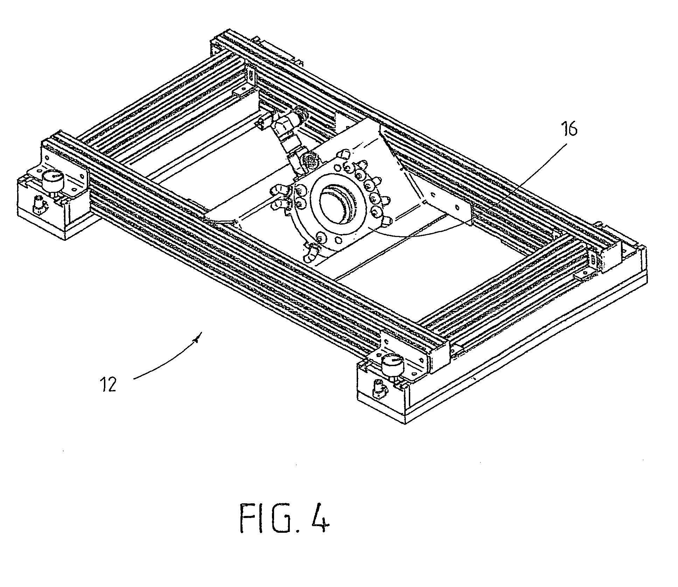

In Fig. 4 ist nun ein Vakuumgreifer 12 gezeigt, wie er für die Bewegung von Werkstücken 20 mit planen Oberflächen 24 zum Einsatz kommen kann. Man erkennt die Gegenschnittstelle 16, mit welcher der Vakuumgreifer 12 mit der Schnittstelle 15 am Roboter 10 in Wirkverbindung bringbar ist. Die Schnittstelle 15 und Gegenschnittstelle 16 bilden dabei nicht nur eine mechanische Verbindung zwischen Roboter 10 und Vakuumgreifer 12, sondern auch eine elektrische Verbindung, die zur Steuerung des Vakuumgreifers 12 dient. So ist beispielsweise über den Roboter 10 das Vakuum am Vakuumgreifer 12 steuerbar. Ähnliches gilt auch für die anderen Bauteile, nämlich den Messdorn 13 sowie den Schleifkopf 11, welche ebenfalls über eine Gegenschnittstelle 16 mit der Schnittstelle 15 am Roboter 10 in Wirkverbindung bringbar sind.

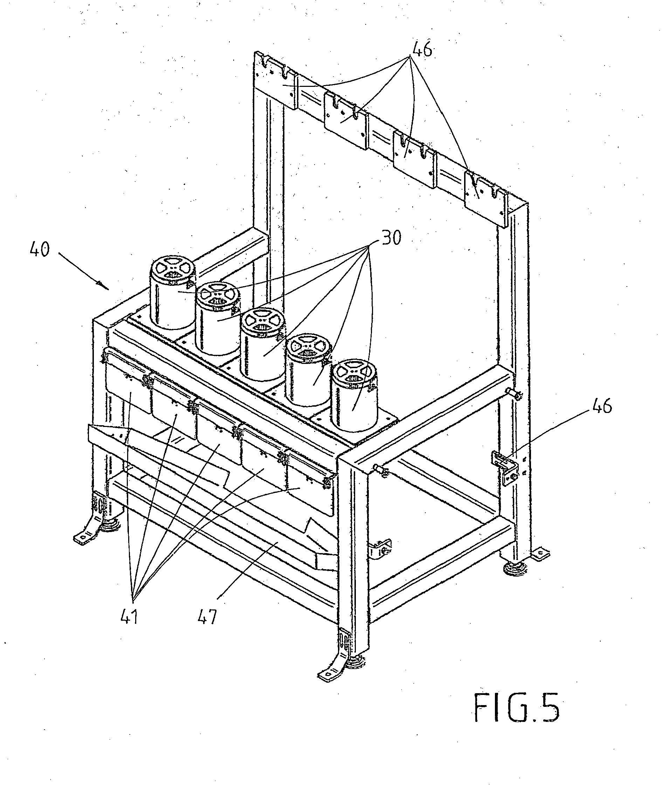

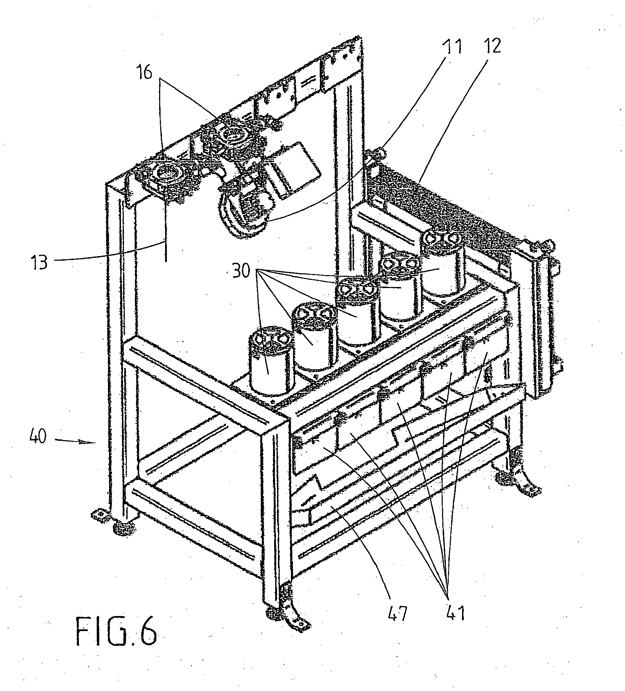

Die Fig. 5 und 6 zeigen nun eine erfindungsgemäße Abstreifeinrichtung 40. Diese Abstreifeinrichtung 40 verfügt über mehrere Abstreifer 41, an welchen das Schleifmittel 14 vom Schleifkopf 11 ablösbar ist, wie noch später gezeigt werden wird. Die Abstreifeinrichtung 40 weist dabei mehrere Halterungen 46 auf, deren Benutzung aus Fig. 6 näher ersichtlich ist. Hier ist nämlich gezeigt, dass sowohl der Messdorn 13 als auch der Schleifkopf 11 im oberen Bereich der Abstreifeinrichtung 40 an je einer Halterung 46 gehaltert werden. Der Vakuumgreifer 12 wird an einer Halterung 46 an der Seite der Abstreifeinrichtung 40 gehaltert. Somit bietet die Abstreifeinrichtung 40 eine günstige und platzsparende Möglichkeit, um nicht verwendete Bauteile, wie Schleifkopf 11, Vakuumgreifer 12 oder Messdorn 13 zu lagern, bis sie vom Roboter 10 wieder benötigt werden. Der Roboter 10 kann dann wiederum mit seiner Schnittstelle 15 an die Gegenschnittstelle 16 des jeweiligen Bauteiles 11, 12, 13 herantreten und das benötigte Bauteil 11, 12, 13 von der Abstreifeinrichtung 40 entfernen und einer Verwendung im erfindungsgemäßen Verfahren zuführen.

Des Weiteren erkennt man in der Abstreifeinrichtung 40 noch mehrere Vorratsbehälter 30, die zur Vorratshaltung der Schleifmittels 14 dienen. In den Vorratsbehältern 30 können dabei gleiche oder auch verschiedene Schleifmittel 14 angeordnet sein, je nach durchzuführendem Schleifprozess. Auch dies wird später noch näher erläutert werden.

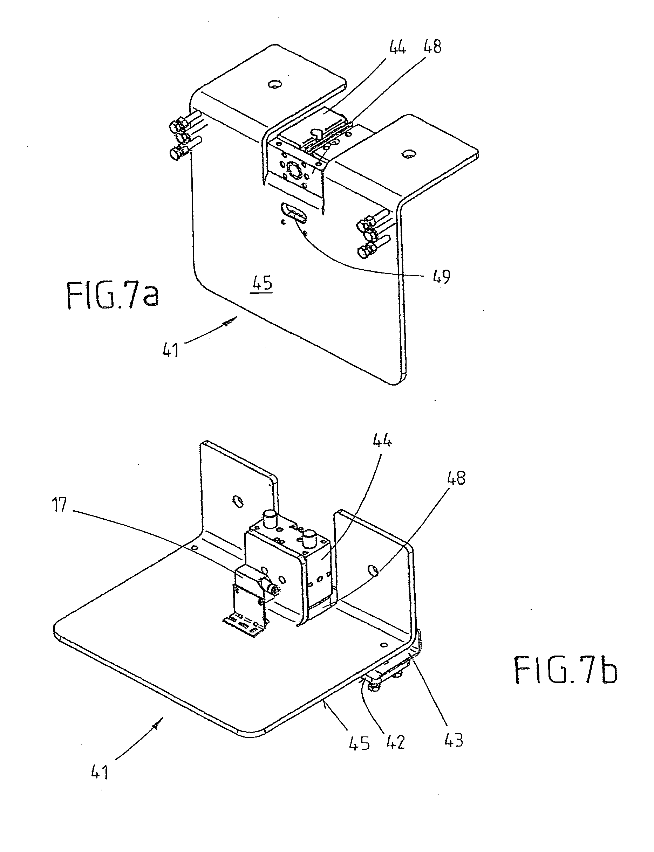

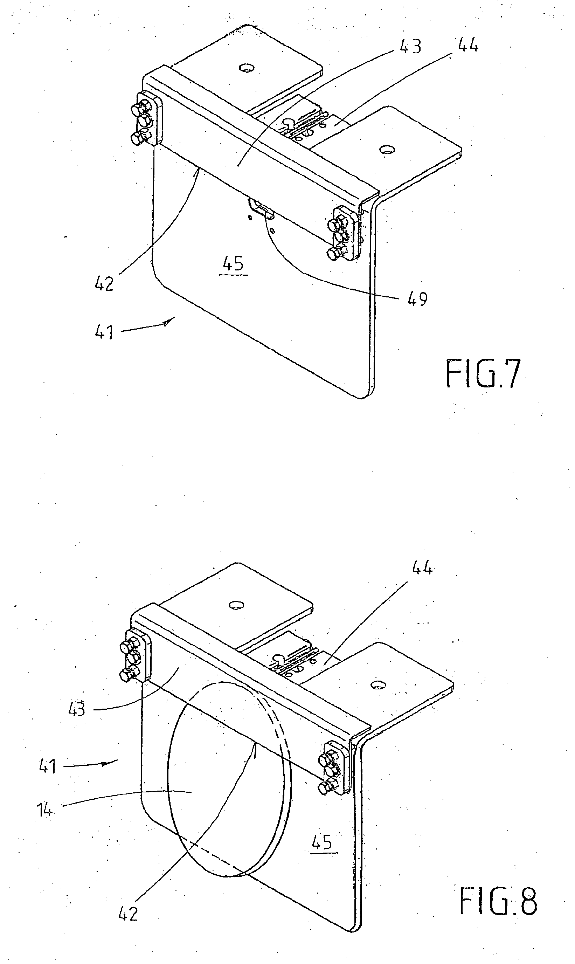

Die Fig. 7 und 8 zeigen nun den Abstreifer 41 ohne Abstreifeinrichtung 40. Man erkennt die Kante 42 sowie den Halter 43 und die Fläche 45. Soll nun ein Schleifmittel 14 vom Schleifkopf 11 entfernt werden, so fährt der Roboter 10 mit dem Schleifkopf 11 dicht an den Abstreifer 41 heran. Der Roboter 10 bewegt den Schleifkopf 11 mit Schleifmittel 14 von unten an die Kante 42, damit diese Kante 42 zwischen den Schleifkopf 11 und das Schleifmittel 14 gelangen kann. Hierdurch wird die physische Verbindung zwischen Schleifmittel 14 und Schleifkopf 11 angelöst. Von der Rückseite des Abstreifers 41 her fährt dann ein Druckbalken 48 an das Schleifmittel 14 heran, um es am Halter 43 einzuklemmen und so festzulegen. Wird dann der Schleifkopf 11 mit Hilfe des Roboters 10 vom Abstreifer 41 entfernt, so bleibt das Schleifmittel 14 am Halter 43 festgeklemmt zurück und die Verbindung zwischen Schleifkopf 11 und Schleifmittel 14 ist gelöst. Der Druckbalken 48 wird vorzugweise über einen Zylinder 44, wie einen Gasdruck- oder Hydraulikzylinder bewegt und dabei gegen den Halter 43 gedrückt, wobei das Schleifmittel 14, wie in Fig. 8 gezeigt, zwischen dem Halter 43 und dem Druckbalken 48 eingeklemmt wird. Das Schleifmittel 14 kann nun in dieser eingeklemmten Stellung am Abstreifer 41 verbleiben, bis es erneut im Schleifprozess benötigt wird. Dann kann der Roboter 10 mit dem Schleifkopf 11 an den Abstreifer 41 bzw. das dort befindliche Schleifmittel 14 heranfahren und dieses kontaktieren. Der Druckbalken 48 wird dann mit Hilfe des Zylinders 44 bewegt und gibt das Schleifmittel 14 wieder frei. Der Roboter 10 kann dann mit dem gewünschten Schleifprozess beginnen.

Des Weiteren sieht man ein Sensorauge 49, über welches ein Abstreifsensor 17 überprüft, ob das Schleifmittel 14 an dem Abstreifer 41 befindlich ist. Hierüber kann der Roboter 10 überprüfen, ob der Schleifkopf 11 frei von Schleifmittel 14 ist und dieses am Abstreifer 41 abgestreift wurde. Ist dies nicht der Fall, so kann der Roboter 10 den Abstreifvorgang wiederholen, wie bereits weiter oben beschrieben.

Wird das Schleifmittel 14 jedoch nicht mehr benötigt, sondern soll es der Entsorgung zugeführt werden, so kann der Druckbalken 48 das festgeklemmte Schleifmittel 14 nach, der Entfernung des Schleifkopfes 11 wieder freigeben. Das Schleifmittel 14 fällt dann gemäß der Schwerkraft nach unten, wo vorzugsweise eine Entsorgungseinrichtung, wie eine Rutsche 47, vorgesehen ist. Eine solche Rutsche 47 ist aus den Fig. 5 und 6 ersichtlich. Das Schleifmittel 14 gleitet dann über die Rutsche 47 in einen Auffangbehälter oder auch direkt in die Entsorgung. So werden verbrauchte Schleifmittel 14, die nicht mehr benötigt werden, direkt der Entsorgung zugeführt.

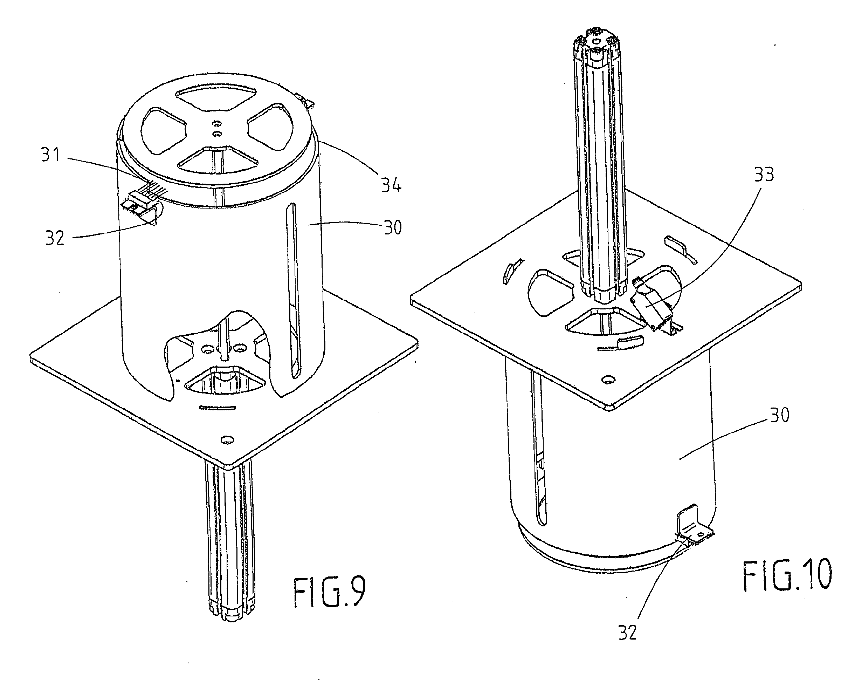

Einen erfindungsgemäßen Vorratsbehälter 30 zeigen die Fig. 9 und 10. Der Vorratsbehälter 30 ist dabei mit einem durchbrochenen Boden ausgestattet, der über einen Druckzylinder, wie einen Gasdruck- oder Hydraulikzylinder, o.ä. verfügt, der den Boden mit den im Vorratsbehälter 30 befindlichen Schleifmitteln 14 nach oben oder nach unten bewegen kann. Der Boden ist in Fig. 9 im oberen Bereich des Vorratsbehälters 30 ersichtlich. Während des Betriebes ist im Vorratsbehälter 30 eine Anzahl von scheibenförmigen Schleifmitteln 14 lagerbar. Diese sind dann vom Schleifkopf 11 des Roboters 10 einzeln entnehmbar. Da der Schleifkopf 11 am Roboter 10 exzentrisch gelagert ist, fährt der Roboter 10 zunächst den oberen Bereich des Vorratsbehälters 30 an, um den Schleifkopf 11 auszurichten, so dass dieser die korrekte Position zu den im Vorratsbehälter 30 gelagerten Schleifmitteln 14 einnimmt. Danach fährt der Schleifkopf 11 in den Vorratsbehälter 30 ein, während von unten der Druckzylinder den Boden des Vorratsbehälters 30 mit den Schleifmitteln 14 nach oben fährt und das oberste Schleifmittel 14 an den Schleifkopf 11 andrückt. Insbesondere bei Verwendung einer Klettverbindung zwischen Schleifkopf 11 und Schleifmittel 14 kann so eine feste und sichere Verbindung zwischen diesen Bauteilen hergestellt werden.

Aus Fig. 10 ist ein Vorratssensor 33 ersichtlich, der überprüft, ob noch Schleifmittel 14 im Vorratsbehälter 30 vorhanden ist. Sollte dies nicht mehr der Fall sein, so fährt der Roboter 10 mit seinem Schleifkopf 11 automatisch einen anderen Vorratsbehälter 30 an und im System wird eine Meldung herausgegeben, welcher mitteilt, dass in dem betreffenden Vorratsbehälter 30 Schleifmittel 14 nachgefüllt werden müssen.

Um zu verhindern, dass der Roboter 10 mit seinem Schleifkopf 11 versehentlich mehrere Schleifmittel 14 auf einmal aus dem Vorratsbehälter 30 entnimmt, ist am Ausgangsbereich 34 des Vorratsbehälters 30 ein Vorsprung 31 vorgesehen. Dieser ragt in den lichten Innenumfang des Vorratsbehälters 30 hinein, so dass er Schleifmittel 14, die am Schleifkopf 11 befindlich sind, beim Herausführen aus dem Vorratsbehälter 30 berührt. Vorzugsweise sind der bzw. die Vorsprünge 31, wie hier dargestellt, als Bürsten 32 ausgebildet. Es ist jedoch auch möglich, die Vorsprünge 31 als Lippen oder Ähnliches auszubilden. Streift nun der Schleifkopf 11 mit mehreren Schleifmitteln 14 am Vorsprung 31 vorbei, so streift der Vorsprung 31 bzw. die Bürste 32 überschüssige Schleifmittel 14 vom Schleifkopf 11 ab. Diese überschüssigen Schleifmittel 14 fallen dann in den Vorratsbehälter 30 zurück und können bei einem nachfolgenden Arbeitsgang Verwendung finden.

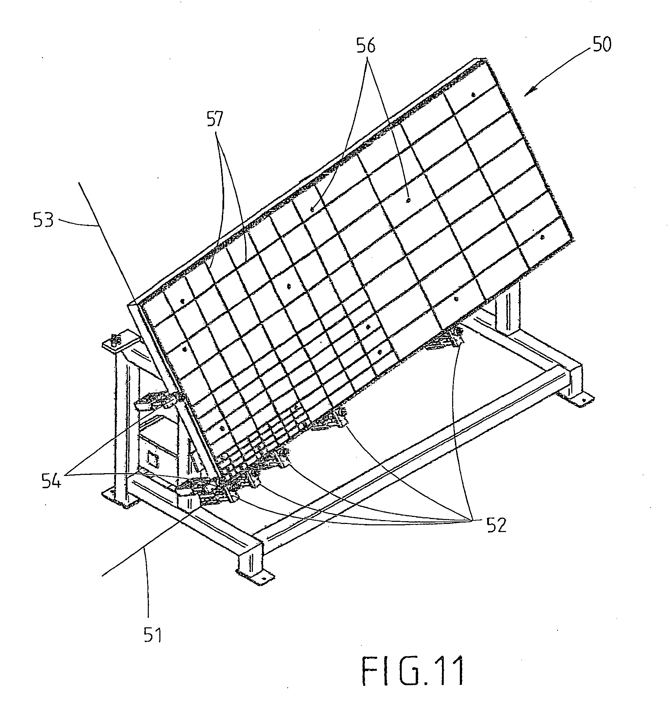

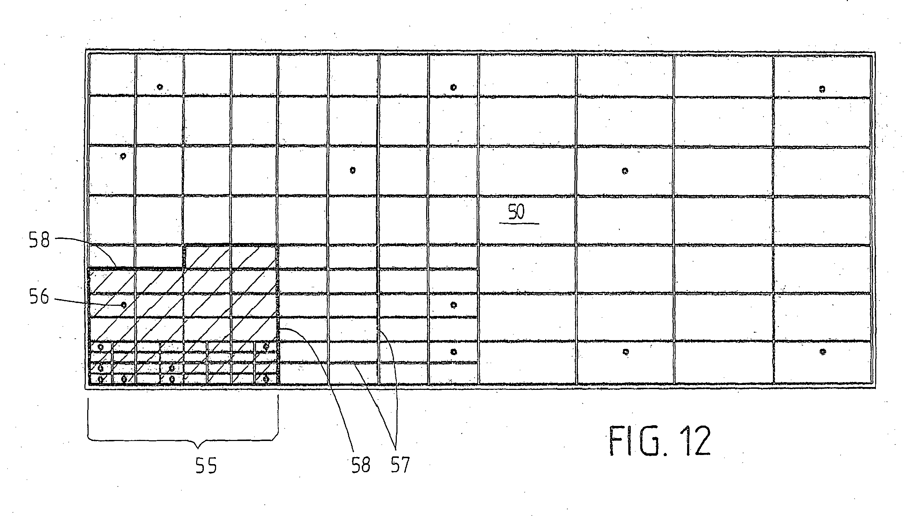

Ein Vakuumtisch 50 ist nun in den Fig. 11 und 12 gezeigt. Fig. 12 zeigt dabei die Oberfläche eines solchen Vakuumtisches 50 im Detail. Aus Fig. 11 ist noch das am Vakuumtisch 50 befindliche Gestell ersichtlich, welches dafür sorgt, dass der Vakuumtisch 50 dreh- und kippbar ist. Auf der Oberfläche des Vakuumtisches 50 sind mehrere Vakuumfelder 55 vorgesehen. Werden nun Werkstücke 20 bearbeitet, welche auf ihrer Rückseite Öffnungen, Ausnehmungen, Nuten oder Ähnliches aufweisen, so können bei herkömmlichem, durchgehenden Vakuumtischen 50 Vakuumverluste auftreten, wenn das Vakuum über die gesamte Rückseite des zu bearbeitenden Werkstückes 20 anliegt. Der erfindungsgemäße Vakuumtisch 50 weist nun mehrere Nuten 57 auf, in welche Dichtungen 58 einführbar sind. So können Vakuumfelder 55 individuell nach Größe und Form hergestellt werden. Bereiche mit Aussparungen, Nuten, Öffnungen und Ähnlichem an der Rückseite des Werkstückes 20 können dabei ausgelassen werden, so dass diese nicht in einem Vakuumfeld 55 vorliegen. Zumindest ein Vakuumanschluss 56 ist in jedem Vakuumfeld 55 vorgesehen. Die Vakuumfelder 55 können für alle Werkstücke 20 einmal fest am Vakuumtisch 50 eingerichtet werden. Je nach zu bearbeitendem Werkstück 20 werden dann ein oder mehrere Vakuumfelder 55 eingeschaltet. So müssen nicht immer alle Vakuumfelder 55 in Betrieb sein, um ein Werkstück 20 am Vakuumtisch 50 zu fixieren. Selbstverständlich sind auch andere Möglichkeiten denkbar um die Vakuumfelder 55 zu definieren.

Durch die Verwendung des Vakuumtisches 50 ist es auch möglich, bei plattenförmigen Werkstücken 20 die so genannten Kanten mit zu bearbeiten. Hierfür sind die ersten 52 und zweiten Anschläge 54 versenkbar gestaltet, so dass die an ihnen anliegenden Kanten bearbeitet werden können, sobald das Werkstück 20 durch das Vakuum des Vakuumtisches 50 fixiert ist. Sollen nicht nur diese beiden Kanten, sondern auch noch weitere Kanten bearbeitet werden, so kann das plattenförmige Werkstück 20 beispielsweise durch den Vakuumgreifer 12 gedreht werden, insbesondere um 180°. Dann kann das Werkstück 20 wieder auf seine Nullposition ausgerichtet werden und weitere Kanten können bearbeitet werden.

Abschließend sei noch darauf hingewiesen, dass die hier dargestellten Ausführungsformen lediglich beispielshafte Verwirklichungen der Erfindung sind. Diese ist nicht darauf beschränkt. Es sind vielmehr noch Abänderungen und Abwandlungen möglich. Insbesondere ist es vorteilhaft, für alle möglichen Werkstücke die Bearbeitungsprozesse in Form von Computerprogrammen oder Anweisungen zu speichern. So muss nur angegeben werden, welche Werkstücke mit Hilfe des Roboters bearbeitet werden sollen und die für die Bearbeitung notwendigen Parameter werden automatisch an die Anlage bzw. den Roboter übermittelt. Besonders vorteilhaft ist in diesem Zusammenhang eine übergeordnete Steuerung, über welche sämtliche Einrichtungen und Prozessvorgänge der Anlage steuerbar sind. So sind hierüber nicht nur der Roboter, sondern auch der Vakuumtisch, die Abstreifeinrichtung, der Drehtisch, die Fördereinrichtungen, wie Kettenförderer und Ähnliches steuerbar. Eine solche Steuerung ist auch von einer Bedienperson bedienbar, die hier neue Parameter für die Werkstücke eingibt bzw. auch angeben kann, welche Werkstücke bearbeitet werden sollen. Darüber hinaus kann die Steuerung auch verschiedene Parameter oder Zustände angeben, z.B. dass Vorratsbehälter leer sind, dass an benutztes Schleifmittel am Abstreifer hängt, dass die Werkstücke fertig bearbeitet sind, o.ä. Das Verfahren ist selbstverständlich nicht nur für Werkstücke aus hartmineralischen Materialien anwendbar, sondern auch für Werkstücke aus anderen Materialien, wie Holz, Glas, Kunststoff, Stein, Metall, Verbundwerkstoffe oder Ähnliches.

### Bezugszeichenliste:

- 10: Roboter
- 11: Schleifkopf
- 12: Vakuumgreifer
- 13: Messdorn
- 14: Schleifmittel
- 15: Schnittstelle an 10
- 16: Gegenschnittstelle an 11, 12, 13
- 17: Abstreifsensor
- 20: Werkstück
- 21: Bearbeitungsbereich
- 22: Bevorratungsbereich
- 23: Drehtisch
- 24: Oberfläche von 20
- 25: Ablagebereich
- 26: Anlage
- 30: Vorratsbehälter
- 31: Vorsprung
- 32: Bürste
- 33: Vorratssensor
- 34: Ausgangsbereich von 30
- 40: Abstreifeinrichtung
- 41: Abstreifer
- 42: Kante
- 43: Halter
- 44: Zylinder
- 45: Fläche
- 46: Halterung
- 47: Rutsche
- 48: Druckbalken
- 49: Sensorauge
- 50: Vakuumtisch
- 51: Erste Anschlagkante
- 52: Erster Anschlag
- 53: Zweite Anschlagkante
- 54: Zweiter Anschlag
- 55: Vakuumfeld von 50
- 56: Vakuumanschluss
- 57: Nut
- 58: Dichtung

## Patentansprüche

1. Verfahren zum mehrstufigen Schleifen von Werkstücken (20) aus harten mineralischen Materialien, unter Einsatz eines Roboters (10),
wobei das Werkstück (20) in einen Bearbeitungsbereich (21) verbracht und dort von dem Roboter (10) vermessen und/oder ausgerichtet wird,
wobei der Roboter (10) einen Schleifkopf (11) umfasst, mit dem er dann ein erstes Schleifmittel (14) vorzugsweise aus einem Vorratsbehälter (30) aufnimmt und einen ersten Schleifprozess beginnt,
wobei nach Beendigung des ersten Schleifprozesses der Roboter (10) das erste Schleifmittel (14) abgibt
und der Roboter (10) dann ein zweites Schleifmittel (14) vorzugsweise aus dem gleichen oder einem anderen Vorratsbehälter (30) aufnimmt und er einen zweiten Schleifprozess beginnt und nach Beendigung des zweiten Schleifprozesses das zweite Schleifmittel (14) abgibt,
wobei noch ein oder mehrere Schleifprozesse vorgesehen sein können, bei denen der Roboter (10) zunächst das jeweilige Schleifmittel (14) vorzugsweise aus dem gleichen oder einem anderen Vorratsbehälter (30) aufnimmt, den Schleifprozess durchführt und dann das jeweilige Schleifmittel (14) wieder abgibt
und wobei nach Beendigung des letzten Schleifprozesses das Werkstück (20) aus dem Bearbeitungsbereich (21) entfernt wird.

2. Verfahren nach Anspruch 1, **dadurch gekennzeichnet, dass** das jeweilige Schleifmittel (14) nach Beendigung des zugehörigen Schleifprozesses an einer Abstreifeinrichtung (40) abgestreift wird.

3. Verfahren nach einem der Ansprüche 1 öder 2, **dadurch gekennzeichnet, dass** das Werkstück (20) zwischen zwei Schleifprozessen gedreht wird, insbesondere um 180°.

4. Verfahren nach Anspruch 3, **dadurch gekennzeichnet, dass** die Drehung des Werkstückes (20) über einen Vakuumgreifer (12) erfolgt oder darüber, dass das Werkstück (20) sich auf einem Drehtisch (23) befindet und dieser mit dem Werkstück (20) gedreht wird.

5. Verfahren nach einem der Ansprüche 1 bis 4, **dadurch gekennzeichnet, dass** das Werkstück (20) auf wenigstens einer nicht planen Oberfläche (24) und/oder auf mehr als einer Oberfläche (24) bearbeitet wird, wobei die Oberflächen (24) parallel oder senkrecht oder in einem anderen Winkel zueinander angeordnet sind.

6. Verfahren nach einem der Ansprüche 1 bis 5, **dadurch gekennzeichnet, dass** das Werkstück (20) mittels wenigstens eines Messdorns (13) und/oder zumindest eines Lasers vor der Bearbeitung vermessen wird.

7. Verfahren nach einem der Ansprüche 1 bis 6, **dadurch gekennzeichnet, dass** der Roboter (10) mit dem Schleifkopf (11), dem Vakuumgreifer (12) und dem Messdorn (13) an derselben Schnittstelle (15) in Wirkverbindung tritt, wobei der Schleifkopf (11), der Vakuumgreifer (12) und/oder der Messdorn (13) eine Gegenschnittstelle (16) aufweisen und dass der Roboter (10) die Bauteile (11, 12, 13), die für den einzelnen Verfahrensschritt nicht benötigt werden, ablegt.

8. Verfahren nach einem der Ansprüche 1 bis 7, **dadurch gekennzeichnet, dass** der Roboter (10) zu Beginn des Verfahrens das zu bearbeitende Werkstück (20) von einem Bevorratungsbereich (22) in den Bearbeitungsbereich (21) bringt und dort vorzugsweise auf eine definierte Nullposition ausrichtet.

9. Verfahren nach einem der Ansprüche 1 bis 8, **dadurch gekennzeichnet, dass** von dem Roboter (10) plattenförmige Werkstücke (20) bearbeitet werden, wobei diese durch einen Vakuumgreifer (12) in den und/oder aus dem Bearbeitungsbereich (21) verbracht werden.

10. Verfahren nach einem der Ansprüche 1 bis 9, **dadurch gekennzeichnet, dass** bei der Bearbeitung plattenförmiger Werkstücke (20) diese nach Abschluss der Bearbeitung in einem Ablagebereich (25) gestapelt werden, wobei vorzugsweise zwischen zwei Werkstücken (20) eine Schutzlage wie eine Kartonagelage eingebracht wird.

11. Verfahren nach einem der Ansprüche 1 bis 10, **dadurch gekennzeichnet, dass** bei der Bearbeitung plattenförmiger Werkstücke (20) diese auf einem vorzugsweise kipp- und/oder drehbaren Vakuumtisch (50) fixiert werden.

12. Verfahren nach Anspruch 11, **dadurch gekennzeichnet, dass** das plattenförmige Werkstück (20) zunächst auf den Vakuumtisch (50) verbracht wird, ohne dass ein Vakuum am Vakuumtisch (50) anliegt,
dass der Vakuumtisch (50) dann in eine Richtung gekippt wird, wodurch das Werkstück (20) in Richtung der Schwerkraft mit einer ersten Kante (erste Anschlagkante 51) gegen einen ersten Anschlag (52) rutscht,
dass dann das Werkstück (20), insbesondere von einem Vakuumgreifer (12), aufgenommen und mit einer zweiten Kante (zweite Anschlagkante 53) gegen einen zweiten Anschlag (54) bewegt wird, wobei die zweite Anschlagkante (53) vorzugsweise senkrecht zu der ersten Anschlagkante (51) angeordnet ist,
dass dann das Vakuum des Vakuumtisches (50) eingeschaltet und das Werkstück (20) auf dem Vakuumtisch (50) fixiert wird und das vorzugsweise erst danach das Vakuum des Vakuümgreifers (12) abgeschaltet wird.

13. Vakuumtisch (50) zur Verwendung bei der Durchführung eines Verfahrens nach einem der Ansprüche 11 oder 12, **dadurch gekennzeichnet, dass** ein oder mehrere Vakuumfelder (55) und mehrere Vakuumanschlüsse (56) am Vakuumtisch (50) vorgesehen sind,
wobei die verschiedenen Vakuumfelder (55) vorzugsweise je mindestens einen Vakuumanschluss (56) aufweisen
und wobei die Vakuumfelder (55) flexibel einteilbar und gegeneinander abgrenzbar sind, vorzugsweise durch die die jeweiligen Vakuumfelder (55) umgebende und/oder unterteilende Nuten (57), in welche Dichtungen (58) einbringbar sind, um die Unterteilung vorzunehmen.

14. Vorratsbehälter (30) für Schleifmittel (14) zur Verwendung bei der Durchführung eines Verfahrens nach einem der Ansprüche 1 bis 12, **dadurch gekennzeichnet, dass** in dem Vorratsbehälter (30) eine Anzahl an scheibenförmigen Schleifmitteln (14) lagerbar ist, welche dann von dem Schleifkopf (11) des Roboters (10) einzeln entnehmbar sind, wobei vorzugsweise ein oder mehrere Vorratssensoren (33) vorgesehen sind, über welche ermittelbar ist, ob noch Schleifmittel (14) im Vorratsbehälter (30) befindlich sind.

15. Vorratsbehälter (30) nach Anspruch 14, **dadurch gekennzeichnet, dass** wenigstens ein Vorsprung (31) vorgesehen ist, der im Ausgangsbereich (34) des Vorratsbehälters (30) angeordnet ist und mittels welchem zu viel aufgenommene Schleifmittel (14) vom Schleifkopf (11) automatisch abstreifbar sind.

16. Vorratsbehälter nach einem der Ansprüche 14 oder 15, **dadurch gekennzeichnet, dass** der bzw. die Vorsprünge (31) von einer oder mehreren Lippen oder Bürsten (32) gebildet werden.

17. Abstreifeinrichtung (40) zur Verwendung bei der Durchführung eines Verfahrens nach einem der Ansprüche 1 bis 12, **dadurch gekennzeichnet, dass** wenigstens ein Abstreifer (41) vorgesehen ist, der eine Kante (42) aufweist, an der die physische Verbindung des Schleifmittels (14) am Schleifkopf (11) anlösbar ist und der weiterhin einen Druckbalken (48) umfasst, durch den das angelöste Schleifmittel (14) festlegbar ist.

18. Abstreifeinrichtung (40) nach Anspruch 17, **dadurch gekennzeichnet, dass** der Druckbalken (48) über wenigstens einen Zylinder (44) wie einen Gasdruckzylinder oder einen Hydraulikzylinder bewegbar und gegen einen Halter (43) drückbar ist, wobei das Schleifmittel (14) zwischen den Druckbalken (48) und den Halter (43) klemmbar ist, wobei vorzugsweise noch eine Entsorgungseinrichtung wie eine Rutsche (47) vorgesehen ist, über welche verbrauchte Schleifmittel (14) der Entsorgung zuführbar sind.

19. Abstreifeinrichtung (40) nach einem der Ansprüche 17 oder 18, **dadurch gekennzeichnet, dass** die Abstreifeinrichtung (40) gleichzeitig eine oder mehrere Halterungen (46) für den Schleifkopf (11) und/oder den Vakuumgreifer (12) und/oder den Messdorn (13) aufweist, an denen diese Bauteile (11, 12, 13) halterbar sind während sie nicht von dem Roboter (10) verwendet werden.

20. Abstreifeinrichtung (40) nach einem der Ansprüche 16 bis 19, **dadurch gekennzeichnet, dass** die Abstreifeinrichtung (40) mehrere Vorratsbehälter (30) nach einem der Ansprüche 14 bis 16 umfasst, in denen die verschiedenen Schleifmittel (14) für die unterschiedlichen Schleifprozesse lagerbar sind.

21. Anlage (26) zur Durchführung des Verfahrens nach einem der Ansprüche 1 bis 12, mit wenigstens einem Roboter (10), der zumindest einen Schleifkopf (11) aufweist, wenigstens einem Vakuumtisch (50) nach Anspruch 13, einer oder mehreren Abstreifeinrichtungen (40) nach einem der Ansprüche 17 bis 20, vorzugsweise mit wenigstens einem Vorratsbehälter nach einem der Ansprüche 14 bis 16 und zumindest je einem Bevorratungsbereich (22), Bearbeitungsbereich (21) und Ablagebereich (25).
